# EUROPÄISCHE PATENTANMELDUNG

(11) **EP 0 946 037 A1**
(43) Veröffentlichungstag der Anmeldung: **29.09.1999**
(21) Anmeldenummer: 98105494.3
(22) Anmeldetag: 26.03.1998
(51) Int. Cl.: H04M 11/04

(54) **Mobiles Notrufgerät**

(71) Anmelder: Gruenheier, Karsten, 30855 Langenhagen (DE)
(72) Erfinder: Gruenheier, Karsten, 30855 Langenhagen (DE)

(57) **Zusammenfassung**

Der Erfindung liegt die Aufgabe zugrunde, ein einfaches und effektives Notrufverfahren anzugeben, das einen Notruf durch Kommunikation zwischen dem Notrufenden und der Notrufstelle ermöglicht. Durch Drücken einer Taste (T) an einem Notrufgerät (N) wird intern eine Energiequelle aktiviert und selbsttätig über an sich bekannte Mobilfunknetze eine Verbindung zu einer Notrufstelle (z.B. Polizei) hergestellt. Nach dem Herstellen der Verbindung ist eine Kommunikation zwischen den beiden Stellen möglich. Ist das Notrufgerät (N) mit einem Ortungsprozessor ausgestattet, können die ermittelten Positionsdaten des Gerätes an die Notrufstelle gesendet werden.

## Beschreibung

Notrufsysteme und Verfahren sind an sich bekannt. Dabei gibt es unterschiedliche Möglichkeiten der Übertragung des Notrufes von der notrufenden Stelle bis hin zu der Steile, die diesen Notruf entgegennimmt und weiter verarbeitet. Ist ein Notruf abgesetzt worden und sind entsprechende Maßnahmen eingeleitet worden, kann man von einer geschlossenen Rettungskette sprechen. Jedes Glied in dieser Kette hat eine fest umschriebene Funktion.

Ausgehend von diesem Stand der Technik hat sich die Erfindung die Aufgabe gestellt, ein Notrufgerät vorzuschlagen, das es ermöglicht die Zeiten einer Auslösung eines Notrufes in vielen Situationen erheblich zu verkürzen.

Grundsätzlich besteht das Problem, das an dem Ort, wo es zu einer Gefahrensituation (z.B. ein Verbrechen) oder zu einem Unfall kommt, oft kein Notruftelefon zur Verfügung steht. In diesen Fällen sind Personen in Ihrer Freizeit oder bei Ihrer beruflichen Tätigkeit mit dem Problem konfrontiert so schnell wie nur irgend möglich einen Notruf abzusetzen, damit die oben erwähnte Rettungskette geschlossen und die damit verbundenen Maßnahmen in die Wege geleitet werden können. Hinzu kommt, daß die Gefahrensituation oft eine Panik bei dem Notrufenden auslöst, in der er die entsprechende Notrufnummer falsch wählt oder sogar vergißt.

Um die Möglichkeit zu eröffnen, die Zeit zum Absetzen eines Notrufes zu verkürzen, schlägt die Erfindung ein sogenanntes mobiles Notrufgerät vor, damit zu fast jeder Zeit, an fast jedem Ort und in fast jeder Situation Notrufe abgesetzt werden können.

Zusätzlich kann das Notrufgerät mit einer Einrichtung versehen sein, die es ermöglicht die Position des Gerätes über das GPS (Global Positioning System) zu ermitteln. Dies ist dann von Vorteil, wenn es dem Notrufenden in der Gefahrensituation nicht möglich ist seine Position verbal der Notrufstelle mitzuteilen.

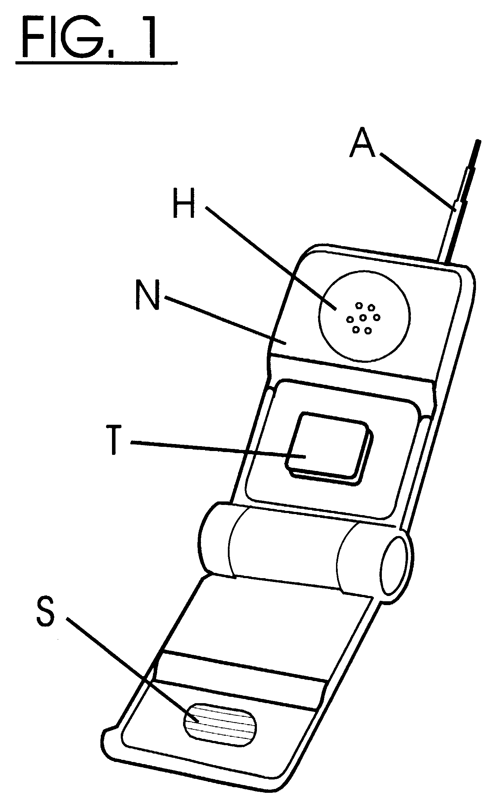

Bei dem in Figur 1 dargestellten Gerät (N) handelt es sich um ein kleines, leichtes, und handliches mit nur einer Taste (T) versehenes mobiles Notrufgerät, das ohne zusätzliche Belastung fast überall mitgeführt werden kann.

Das Notrufgerät ist in seiner Art ähnlich einem Mobiltelefon ausgeführt. Es verfügt über einen Gehäusekörper (N), einer Hör-(H) und Sprachmuschel (S), einer Notruftaste (T) und einer Antenne (A).

Das Gerät selbst ist mit nur einer Taste (T) ausgestattet, um zu gewährleisten, das der Notrufende auch in Paniksituationen ohne fehlerhaftes Bedienen und ohne Zeitverzögerung das Notrufgerät benutzen kann. Dabei ist die Taste (T) durch eine Abdeckplatte oder eine leicht zerstörbare Einrichtung gegen unbeabsichtigtes Betätigen geschützt.

Wird die Abdeckplatte angehoben bzw. die leicht zerstörbare Einrichtung entfernt und die Taste (N) gedrückt, wird im Notrufgerät selbst eine Stromversorgung hergestellt und zwar in der Form, das durch das betätigen der Taste (T) die für den Betrieb des Gerätes nötige Netzspannung aufgebaut wird.

Um zu verhindern das es zu einer vorzeitigen Entladung des Gerätes kommt ist die Spannungsversorgung mit der Taste (T) gekoppelt. Da es sich um ein mobiles Notrufgerät handelt, das nur im Gebrauchszustand, das heißt beim Absetzen eines Notrufes funktionieren soll, wird eine Stromspannung erst bei der Benutzung benötigt.

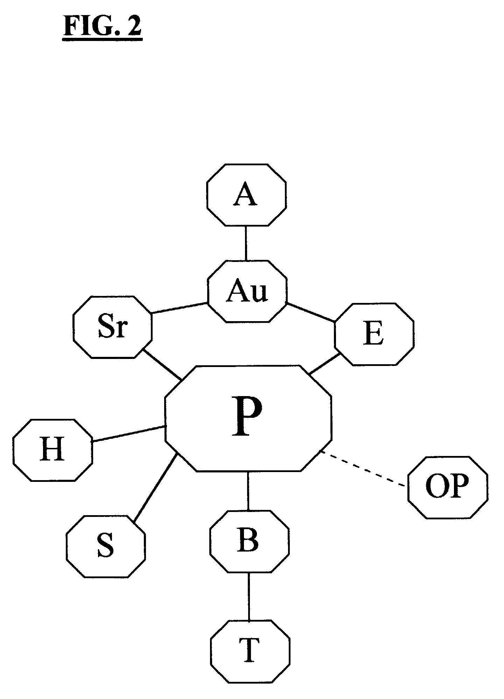

In Figur 2 ist das Ablaufschema des Notrufgerätes dargestellt. Das Gerät ist mit einer Batterie (B) oder einer ähnlichen auswechselbaren Stromquelle versehen. Somit ist auch nach längerer Nichtbenutzung ein Gebrauch des Gerätes (N) gewährleistet, da kein Ruhestrom fließt.

Ist die Spannungsversorgung aufgebaut, wird über einen Prozessor im Gerät selbsttätig eine definierte Notrufnummer (z.B. Polizei) gewählt. Die Verbindung wird über ein bekanntes Mobilfunknetz, z.B. das GSM, aufgebaut. Der Prozessor selbst ist mit einem Sender (Sr) und einem Empfänger (E) gekoppelt, die über eine Ausgangseinheit (Au) mit der Antenne (A) verbunden sind. Dadurch ist eine Verbindung zwischen dem Notrufenden und der Notrufstelle hergestellt. Über die Hör (H)- und Sprachmuschel (S) am Notrufgerät ist eine verbale Kommunikation möglich.

Gleichzeitig ist es denkbar, das Notrufgerät (N) mit einem Ortungsprozessor (OP) auszustatten, dem es ermöglicht über das bekannte GPS (Global Positioning System) die Position des Gerätes zu ermitteln. Nach dem Drücken der Taste (T) ermittelt der Ortungsprozessor (OP) die Position des Gerätes und sendet die Daten über die Ausgangseinheit (Au) und die Antenne (A) an die Notrufstelle.

## Patentansprüche

1. Notrufverfahren, bei dem durch Drücken einer Taste (T) an einem Notrufgerät (N) intern eine Energiequelle aktiviert und automatisch über ein an sich schon bekanntes Mobilfunknetz der Kontakt zu einer Notrufstelle hergestellt wird. Nach dem Herstellen des Kontaktes ist eine Kommunikation in Form von Sprache zwischen dem Notrufenden und der Notrufstelle möglich.

2. Notrufverfahren nach Anspruch 1,
dadurch gekennzeichnet, daß das Notrufgerät (N) mit nur einer Taste (T) ausgestattet ist.

3. Notrufverfahren nach Anspruch 1,
dadurch gekennzeichnet, daß das Notrufgerät (N) mit einer Batterie (B) oder einer anderen austauschbaren Energiequelle ausgerüstet ist.

4. Notrufverfahren nach Anspruch 1,
dadurch gekennzeichnet, daß die interne Energiequelle des Gerätes erst bei Betätigen der Taste (T) am Notrufgerät (N) aktiviert wird.

5. Notrufverfahren nach Anspruch 1,
dadurch gekennzeichnet, daß das Notrufgerät (N) über eine selbsttätige Wähleinrichtung verfügt.

6. Notrufverfahren nach Anspruch 1,
dadurch gekennzeichnet, daß das Notrufgerät (N) den Kontakt zur Notrufstelle über ein an sich bekanntes Mobilfunknetz herstellt.

7. Notrufverfahren nach Anspruch 1,
dadurch gekennzeichnet, daß das Notrufgerät (N) mit einer Sprech-(S) und Hörmuschel (H) ausgestattet ist, die eine Kommunikation zwischen dem Notrufenden und der Notrufstelle ermöglichen.

8. Notrufverfahren nach Anspruch 1,
dadurch gekennzeichnet, daß das Notrufgerät (N) als kleines, transportables Gerät ausgeführt ist.

9. Notrufverfahren nach Anspruch 1,
dadurch gekennzeichnet, das die Taste (T) am Notrufgerät (N) durch eine Abdeckplatte oder eine andere Schutzvorrichtung gegen unbeabsichtigtes Drücken gesichert ist.

10. Notrufgerät nach den Ansprüchen 1 bis 9,
dadurch gekennzeichnet, daß das Gerät (N) über einen an sich bekannten Ortungsprozessor (OP) verfügt, der die Position des Gerätes ermittelt und die Daten über eine Ausgangseinheit(Au) und die Antenne (A) an die Notrufstelle überträgt.
